# DEMANDE DE BREVET EUROPEEN

(11) **EP 4 782 511 A1**
(43) Date de publication de la demande: **29.07.2026**
(21) Numéro de dépôt: 26153588.4
(22) Date de dépôt: 22.01.2026
(51) Int. Cl.: C09J 7/29, E04B 1/62, C08K 5/00, C08K 3/013, C08K 3/016

(54) **MEMBRANE AUTO-ADHÉSIVE, PERMÉABLE À LA VAPEUR D'EAU ET RÉSISTANTE**

(30) Priorité: 27.01.2025 FR 2500841
(71) Demandeur: ADHEX TECHNOLOGIES, 21300 Chenôve (FR)
(72) Inventeur: BEAUGEARD, Vincent, 21000 DIJON (FR); MOUSSIE, Lilian, 21000 DIJON (FR); DURAND, Hervé, 21000 DIJON (FR)
(74) Mandataire: Gevers & Orès

(57) **Abrégé**

- Membrane auto-adhésive, perméable à la vapeur d'eau et résistante.
- La membrane (1) destinée en particulier à être utilisée sur un bâtiment, comporte, en plus d'un support (2) perméable à la vapeur d'eau et d'une couche adhésive (3) sensible à la pression et perméable à la vapeur d'eau, un revêtement (4) résistant et perméable à la vapeur d'eau, qui est obtenu à partir d'une formulation liquide pourvue de charges (6), ladite membrane (1) présentant une résistance élevée à l'abrasion, ce qui permet de protéger efficacement la surface de la membrane (1) adhésive et respirante contre toutes les agressions mécaniques potentiellement subies par la membrane (1) lors de son installation et pendant toute sa durée de vie.

## Description

### Domaine technique

La présente invention concerne une membrane auto-adhésive, perméable à la vapeur d'eau et résistante.

### État de la technique

Bien que non exclusivement, une telle membrane est destinée plus particulièrement au domaine de la construction de bâtiments et, notamment, à être appliquée sur des murs et/ou des sous-toitures pour contrôler les flux de vapeur d'eau.

Afin notamment d'empêcher ou tout au moins de limiter les problèmes d'humidité dans un bâtiment, il est connu de protéger le mur par des membranes respirantes. Les supports des membranes respirantes utilisées dans le bâtiment sont, généralement, composés de matériaux en non-tissé synthétique (comprenant des fibres en polypropylène ou en polyamide par exemple), en tissu (avec une contexture toile par exemple) ou sous forme de grille (comprenant par exemple des fibres de verre) ou de mousse polymérique (par exemple une mousse en polyuréthane). La surface de ce type de membrane respirante, en raison de son caractère perméable à la vapeur d'eau lié à la présence de fibres, de brins, de fils, de tunnels, de trous, de pores ou de cavités, ..., peut s'avérer fragile. Or, lors de la pose de la membrane respirante adhésive et/ou de son stockage sur un chantier, la membrane est susceptible d'être soumise à certaines des actions suivantes : une action d'outils de pose, une manipulation par des opérateurs et/ou une exposition au vent, à la pluie, à la grêle, ...

Il peut en résulter des dégradations superficielles localisées à la surface de ces membranes respirantes, telles que par exemple un démaillage des tissus, un délaminage des non-tissés, une abrasion des mousses, un tirage de fils des ouates, un écartement des mailles des grilles, un effilochage des fibres, ...

Il existe donc un besoin de protection mécanique de la surface du support de la membrane adhésive respirante contre toutes les agressions mécaniques potentiellement subies par la membrane lors de son installation et pendant sa durée de vie.

### Exposé de l'invention

La présente invention a pour objet de proposer une membrane perméable à la vapeur d'eau et auto-adhésive, susceptible de répondre à ce besoin. Elle concerne une membrane destinée en particulier à être utilisée sur un bâtiment, qui comprend un support perméable à la vapeur d'eau et une couche adhésive sensible à la pression et perméable à la vapeur d'eau, ladite couche adhésive étant solidaire d'une première face dudit support.

Selon l'invention, ladite membrane comporte un revêtement qui est résistant et perméable à la vapeur d'eau, qui est obtenu à partir d'une formulation liquide pourvue de charges et qui est solidaire au moins d'une seconde face dudit support, opposée à ladite première face, et ladite membrane présente une résistance à l'abrasion telle qu'elle ne subit pas de dégradation, après 200 tours, avec un test d'abrasion rotative de type Taber selon la norme ASTM D3884-09.

De plus, de préférence, la membrane présente une résistance à l'abrasion telle qu'elle ne subit pas de dégradation après 100 allers-retours, avec un test d'abrasion linéaire de type Crockmeter selon au moins l'une des méthodes d'essai D441221 et D451010, avec une charge de 400 g et un patin de type corde à piano.

Ainsi, grâce à l'invention, on obtient une membrane perméable à la vapeur d'eau et auto-adhésive, qui présente une résistance élevée à l'abrasion, ce qui permet de protéger efficacement la surface du support de la membrane adhésive respirante contre toutes les agressions mécaniques potentiellement subies par la membrane lors de son installation et pendant toute sa durée de vie.

Cette membrane est particulièrement bien adaptée à une utilisation sur un bâtiment et en particulier sur des murs et/ou des sous-toitures pour contrôler les flux de vapeur d'eau. Toutefois, grâce à ses caractéristiques surprenantes et avantageuses, ladite membrane peut également être utilisée dans de nombreuses autres applications, en particulier dans le domaine automobile, notamment pour l'obturation d'orifices sur une carrosserie, par exemple des obturateurs adhésifs résistant et permettant à la vapeur d'eau de s'échapper.

Dans un mode de réalisation particulier, le revêtement est obtenu à partir d'une formulation liquide (soit une dispersion aqueuse où des particules solides sont dispersées dans de l'eau, soit une solution avec solvant où les composants sont dissous dans un solvant) pourvue de charges, qui présente un taux de charge compris entre 30% et 80%, mesuré par un test du taux de charge par calcination à une température de 800°C pendant 60 minutes.

Les charges présentes dans le revêtement permettent de rendre la membrane plus résistante. De plus, elles sont susceptibles de créer des interstices à l'intérieur du revêtement, et/ou des aspérités et/ou des cavités à l'interface entre le support et le revêtement, qui favorisent la respirabilité de la membrane, c'est-à-dire sa perméabilité à la vapeur d'eau.

Dans un premier mode de réalisation, les charges incorporées dans la formulation liquide (et donc dans le revêtement) comprennent au moins l'un des types de charges (minérales) suivants : des charges ignifuges (par exemple du trihydrate d'aluminium ATH), des oxydes (par exemple SiO2 ou TiO2), des pigments minéraux (par exemple un pigment blanc de CaCO3).

Dans un second mode de réalisation, en complément ou en variante dudit premier mode de réalisation, les charges incorporées dans la formulation liquide (et donc dans le revêtement) comprennent au moins des charges intumescentes (par exemple des composés polyphosphorés).

Dans un mode de réalisation préféré, la membrane présente au moins l'une des caractéristiques suivantes :
- un taux de transmission de vapeur d'eau, mesuré selon la norme ASTM E96/E96M-12, supérieur à 1 Perm ; et
- un pouvoir adhésif sur verre, mesuré selon la norme ASTM D3330/D3330M-04, supérieur à 2,6 N/cm.

Dans le cadre de la présente invention, le support de la membrane peut être réalisé de différentes manières.

Dans un premier mode de réalisation, ledit support comprend un non-tissé perméable à la vapeur d'eau, monocouche ou multicouche, qui présente un grammage surfacique compris entre 10 g/m² et 500 g/m², et qui est par exemple réalisé en polyéthylène, en polypropylène, en polyester, en polyuréthane, en polyamide, en viscose ou en cellulose.

Dans un second mode de réalisation, ledit support comprend un complexe non-tissé perméable à la vapeur d'eau, multicouche, qui présente un grammage surfacique compris entre 50 g/m² et 500 g/m², et qui est par exemple réalisé en polyéthylène, en polypropylène, en polyester, en polyuréthane ou en polyamide.

En outre, dans un troisième mode de réalisation, ledit support comprend un film perméable à la vapeur d'eau, monocouche ou multicouche, qui présente un grammage surfacique compris entre 10 g/m² et 500 g/m², et qui est par exemple réalisé en polyéthylène, en polypropylène, en polyester, en polyuréthane ou en polyamide.

Avantageusement, ledit support, lorsqu'il est de type multicouche, comprend, de plus, au moins une couche microperforée (de préférence un film plastique microperforé), perméable à la vapeur d'eau.

Par ailleurs, dans un quatrième mode de réalisation, ledit support comprend une grille (par exemple en verre, en polyester, en polyamide ou en coton) qui présente un grammage surfacique compris entre 10 g/m² et 500 g/m².

Par ailleurs, avantageusement, la couche adhésive du revêtement comprend un adhésif acrylique ou un adhésif polyuréthane.

La présente invention concerne également un procédé de fabrication d'une membrane telle que celle précitée.

Selon l'invention, ledit procédé de fabrication comprend au moins :
- une étape d'enduction, mise en œuvre par un dispositif d'enduction, consistant à enduire au moins une seconde face d'un support perméable à la vapeur d'eau, d'une formulation liquide pourvue de charges ;
- une étape de séchage, mise en œuvre par un dispositif de séchage, consistant à sécher le produit obtenu à l'étape d'enduction ; et
- une étape d'application d'adhésif, mise en œuvre par un dispositif d'application d'adhésif, consistant à appliquer une couche adhésive sensible à la pression et perméable à la vapeur d'eau, sur une première face du support du produit séché à l'étape de séchage, cette première face étant opposée à ladite seconde face du support.

Dans un premier mode de réalisation, à l'étape d'enduction, la formulation liquide est déposée directement sur le support.

En outre, dans un second mode de réalisation, l'étape d'enduction comprend :
une sous-étape d'enduction consistant à déposer la formulation liquide sur une face d'un film antiadhérent ; et
- une étape d'intégration consistant à intégrer le support dans la formulation liquide déposée sur le film antiadhérent.

### Brève description des figures

D'autres avantages et caractéristiques ressortiront mieux de la description qui va suivre de plusieurs modes de réalisation, donnés à titre d'exemples non limitatifs, d'une membrane conforme à l'invention, en se référant notamment aux figures annexées. Sur ces figures, des références identiques désignent des éléments semblables.
La figure 1 est une vue schématique partielle, en coupe, d'une membrane résistante, perméable à la vapeur d'eau et auto-adhésive, conforme à un premier mode de réalisation de l'invention.
La figure 2 est une vue schématique partielle, en coupe, d'une membrane résistante, perméable à la vapeur d'eau et auto-adhésive, conforme à un second mode de réalisation de l'invention.
La figure 3 est le schéma synoptique d'un procédé de fabrication d'une membrane résistante, perméable à la vapeur d'eau et auto-adhésive.
La figure 4 illustre schématiquement un système de fabrication apte à mettre en œuvre le procédé de fabrication de la figure 3.
La figure 5 est une vue schématique partielle, en coupe, d'une partie d'une membrane résistante, perméable à la vapeur d'eau et auto-adhésive, permettant de mettre en évidence des cavités et des interstices.
La figure 6 est une vue schématique d'un premier mode de réalisation d'un dispositif d'enduction faisant partie d'un système de fabrication tel que celui de la figure 4.
La figure 7 est une vue schématique d'un deuxième mode de réalisation d'un dispositif d'enduction.
La figure 8 est une vue schématique d'un troisième mode de réalisation d'un dispositif d'enduction.

### Description détaillée

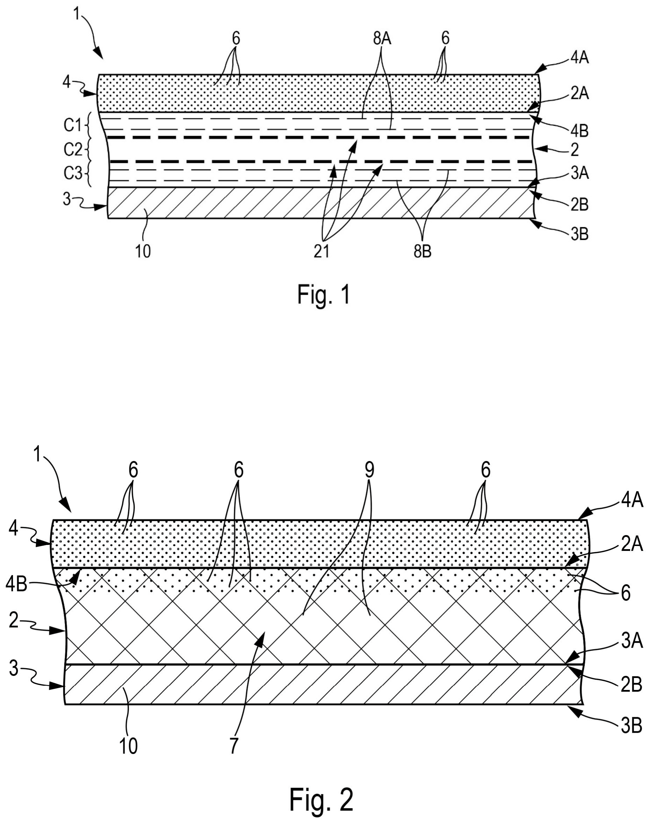

La membrane 1 permettant d'illustrer l'invention et représentée selon deux modes de réalisation différents sur les figures 1 et 2 est une membrane résistante, perméable à la vapeur d'eau et auto-adhésive, comme précisé ci-dessous.

Cette membrane 1 est destinée, plus particulièrement bien que non exclusivement, à être utilisée sur un bâtiment, notamment pour être appliquée sur des murs et/ou des sous-toitures afin de contrôler les flux de vapeur d'eau.

Comme représenté sur les figures 1 et 2, la membrane 1 comprend un support 2 perméable à la vapeur d'eau, pourvue de deux faces 2A et 2B opposées, et une couche adhésive 3 sensible à la pression et perméable à la vapeur d'eau, pourvue de deux faces 3A et 3B opposées. Dans les exemples des figures 1 et 2, la couche adhésive 3 est solidaire par sa face 3A de la face 2B du support 2.

Ladite membrane 1 comprend également un revêtement 4 résistant et respirant (à savoir perméable à la vapeur d'eau), pourvue de deux faces 4A et 4B opposées. Le revêtement 4 est solidaire par sa face 4B de la face 2A du support 2. De préférence, le revêtement 4 recouvre toute la face 2A du support 2.

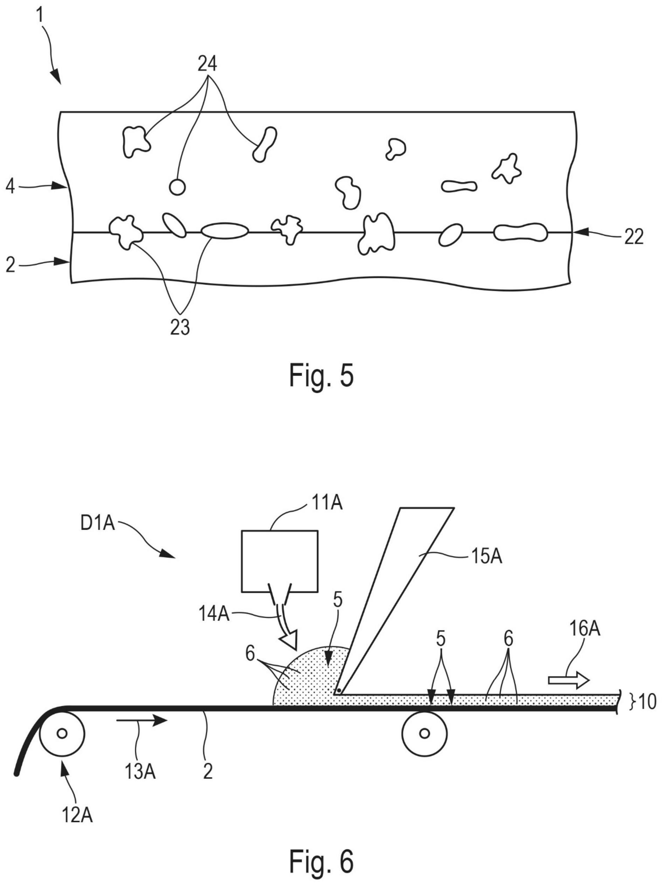

Le revêtement 4 est obtenu à partir d'une formulation liquide 5 (figures 6 à 8), précisée ci-dessous, qui est pourvue de charges 6. Les charges 6 sont illustrées schématiquement par des points noirs sur les figures 1, 2 et 6 à 8.

Dans un mode de réalisation préféré, le revêtement est obtenu à partir d'une formulation liquide 5, correspondant :
- soit à une dispersion aqueuse dans laquelle des particules solides sont dispersées dans de l'eau ;
- soit à une solution avec solvant dans laquelle des composants sont dissous dans au moins un solvant (organique).

Cette formulation liquide 5 est pourvue de charges 6 et présente un taux de charge compris entre 30% et 80%, mesuré par un test du taux de charge par calcination à une température de 800°C pendant 60 minutes.

Dans un mode de réalisation particulier, les charges 6 incorporées dans la formulation liquide 5 (et ensuite dans le revêtement 4) comprennent au moins l'un des types de charges (minérales) suivantes : des charges ignifuges (par exemple du trihydrate d'aluminium ATH), des oxydes (par exemple SiO2 ou TiO2), des pigments minéraux (par exemple un pigment blanc en CaCO3).

Dans un mode de réalisation préféré, les charges 6 incorporées dans la formulation liquide 5 (et ensuite dans le revêtement 4) comprennent au moins des charges intumescentes (par exemple des composés polyphosphorés).

La membrane 1, ainsi constituée et obtenue par exemple d'une des manières décrites ci-dessous, présente, de façon surprenante, une bonne résistance à l'abrasion, et plus particulièrement une résistance à l'abrasion telle :
- qu'elle ne subit pas de dégradation après 200 tours, avec un test d'abrasion rotative de type Taber selon la norme ASTM D3884-09, dans les conditions de test suivantes : une meule CS10, une vitesse 60 tours/min, un poids de 500 g/bras ; et/ou
- qu'elle ne subit pas de dégradation après 100 allers-retours, avec un test d'abrasion linéaire de type Crockmeter selon au moins l'une des méthodes d'essai D441221 et D451010, avec une charge de 400g et un patin de type corde à piano, dans les conditions de test suivantes : une amplitude de mouvement d'aller-retour de 10 cm et une fréquence de 60 allers-retours/min.

En outre, dans un mode de réalisation préféré, la membrane 1 présente un taux de transmission de vapeur d'eau (MVTR pour « Moisture Vapour Transmission Rate » en anglais), mesuré selon la norme ASTM E96/E96M-12, supérieur à 1 Perm, avec la méthode eau (procédure B) à une température de 23°C et un taux d'hygrométrie relative de 95%.

A titre d'illustration, avec une telle méthode de mesure, on obtient les valeurs suivantes :
- 17 Perms, pour une membrane 1 comportant :
   - un support 2 en polypropylène (PP), perméable à la vapeur d'eau, de type tricouche (non-tissé en PP, film microperforé en PP, non-tissé en PP) comme sur l'exemple (décrit ci-dessous) de la figure 1, qui présente une épaisseur de 500 µm et un grammage surfacique de 150 g/m² ;
   - un revêtement 4 intumescent (tel que précisé ci-dessous) présentant un grammage surfacique de 200 g/m² ; et
   - une couche adhésive 3 acrylique présentant un grammage surfacique de 50 g/m² ;
- 13 Perms, pour une membrane 1 comportant :
   - un support 2 en polypropylène (PP), perméable à la vapeur d'eau, de type tricouche (non-tissé en PP, film microperforé en PP, non-tissé en PP) comme sur l'exemple de la figure 1, qui présente une épaisseur de 500 µm et un grammage surfacique de 150 g/m² ;
   - un revêtement 4 intumescent présentant un grammage surfacique de 200 g/m² ; et
   - une couche adhésive 3 acrylique présentant un grammage surfacique de 150 g/m² ;
- 18 Perms, pour une membrane 1 comportant :
   - comme support 2, une grille 7 comme notamment sur l'exemple (décrit ci-dessous) de la figure 2, formée de fibres 9 de verre ;
   - un revêtement 4 intumescent présentant un grammage surfacique de 200 g/m² ; et
   - une couche adhésive 3 présentant un grammage surfacique de 50 g/m² ;
- 10 Perms, pour une membrane 1 comportant :
   - comme support 2, une grille 7 comme notamment sur l'exemple (décrit ci-dessous) de la figure 2, formée de fibres 9 de verre ;
   - un revêtement 4 intumescent présentant un grammage surfacique de 200 g/m² ; et
   - une couche adhésive 3 présentant un grammage surfacique de 150 g/m².

Dans le cadre de la présente invention :
- les valeurs d'épaisseur indiquées sont mesurées selon la méthode de mesure de la norme NF EN ISO 9073-2 ; et
- les valeurs de grammage (surfacique) indiquées sont mesurées selon la méthode de mesure de la norme FTM12 (« FINAT Test Method »).

De plus, dans un mode de réalisation préféré, la membrane 1 présente un pouvoir adhésif sur verre supérieur à 2,6 N/cm, mesuré selon la méthode d'essai ASTM D3330/D3330M-04 - Méthode F (angle 90° et vitesse de traction de 100 mm/min) et/ou selon la méthode de test ASTM D3330/D3330M-04 - Méthode A (angle 180° et vitesse de traction de 300 mm/min).

On notera que les charges 6 présentes dans le revêtement 4 sont susceptibles de créer des interstices à l'intérieur du revêtement 4, et/ou des aspérités et/ou des cavités à l'interface entre le support 2 et le revêtement 4, qui favorisent la respirabilité de la membrane 1, c'est-à-dire sa perméabilité à la vapeur d'eau.

La membrane 1 est par conséquent résistante, perméable à la vapeur d'eau et auto-adhésive. Cette membrane 1 peut être réalisée de différentes manières, et notamment à partir de composants de types différents, comme précisé ci-après.

Plus particulièrement, dans le cadre de la présente invention, le support 2 de la membrane 1 peut être réalisé de différentes manières. Différents exemples de supports perméables à la vapeur d'eau sont décrits ci-dessous à titre d'illustration.

Dans un premier exemple, le support comprend un non-tissé perméable à la vapeur d'eau, monocouche ou multicouche. Ce non-tissé présente un grammage surfacique compris entre 10 g/m² et 500 g/m², et est, par exemple, réalisé en polyéthylène (PE), en polypropylène (PP), en polyester (PET), en polyuréthane (PU), en polyamide (PA), en viscose ou en cellulose.

Dans un deuxième exemple, le support est un complexe non-tissé perméable à la vapeur d'eau, de type multicouche. Ce complexe non-tissé possède un grammage surfacique compris entre 50 g/m² et 500 g/m², et les couches de ce complexe non-tissé sont, par exemple, réalisées en polyéthylène (PE), en polypropylène (PP), en polyester (PET), en polyuréthane (PU) ou en polyamide (PA).

Ce complexe non-tissé respirant multicouche peut également comporter un ou plusieurs films plastiques microperforés.

A titre d'illustration, le complexe non-tissé, formant le support 2, peut comporter, comme représenté sur la figure 1 :
- une couche supérieure C1 formé d'un non-tissé 8A en polypropylène, perméable à la vapeur d'eau ;
- une couche intermédiaire C2 de film en polypropylène, qui est microperforée (pourvue de microperforations 21) de manière à être perméable à la vapeur d'eau ; et
- une couche inférieure C3 formé d'un non-tissé 8B, également en polypropylène et également perméable à la vapeur d'eau.

Les non-tissés 8A et 8B peuvent être identiques ou différents.

En outre, dans un troisième exemple, le support peut comporter tout type de film perméable à la vapeur d'eau, monocouche ou multicouche. Ce film présente un grammage surfacique compris entre 10 g/m2 et 500 g/m2, et est, par exemple, réalisé en polyéthylène, en polypropylène, en polyester, en polyuréthane ou en polyamide.

Un tel support correspondant à un film perméable à la vapeur d'eau, peut également comporter un ou plusieurs films plastiques microperforés perméables à la vapeur d'eau, et notamment un film PP microperforé.

Par ailleurs, dans un quatrième exemple, le support 2 comporte une grille 7, comme représenté sur la figure 2. Cette grille 7 est formée de fibres 9, de différents matériaux possibles. Il peut s'agir de tout type de grille présentant un grammage surfacique compris entre 10 g/m² et 500 g/m², quels que soient sa contexture, son armure, son duitage et le traitement de ses fils de chaîne et de trame (par exemple un revêtement thermocollant, un traitement ignifuge, un traitement antibactérien, ...). A titre d'illustration, la grille peut être une grille de verre, une grille en polyester, une grille en polyamide, ou une grille en coton.

Par ailleurs, dans le cadre de la présente invention, le revêtement 4 de la membrane 1 peut également être réalisé de différentes manières et présenter différentes propriétés, en plus d'être résistant à l'abrasion. Différents exemples de revêtements résistants et respirants sont décrits ci-dessous à titre d'illustration.

Dans un premier exemple, le revêtement est un revêtement intumescent qui comprend des charges intumescentes. Ce revêtement intumescent présente une épaisseur comprise entre 50 µm et 600 µm, et de préférence comprise entre 100 µm et 300 µm.

Ce revêtement intumescent présente l'avantage que, sous l'effet de la chaleur (notamment dégagée par un incendie), il gonfle et constitue, alors, une barrière qui protège la membrane 1 vis-à-vis de la chaleur.

Ce revêtement intumescent présente également l'avantage que, sous l'effet de la chaleur (notamment générée par des flammes), il gonfle et constitue, alors, une barrière qui protège la membrane vis-à-vis des flammes. Cette membrane résiste, alors, aux flammes et conserve son intégrité pendant un certain temps, généralement pendant plusieurs minutes, ce qui représente une durée considérablement allongée par rapport à la durée de résistance de membranes ignifuges usuelles.

Le revêtement intumescent (susceptible de former un bouclier (ou une barrière) thermique) comprend des charges (ou particules) intumescentes, qui peuvent présenter une forme de sphère et/ou de lamelle.

Dans un mode de réalisation particulier, la formulation liquide 5 utilisée pour former le revêtement intumescent comprend une composition chimique intumescente. Cette composition chimique intumescente comporte, de préférence :
- au moins un composé chimique qui est un acide ou qui est un catalyseur acide ou qui génère au moins un acide sous l'effet d'une température supérieure à 150°C ;
- au moins un composé chimique qui génère au moins un composé carboné sous l'action de l'acide ; et
- au moins un composé chimique qui génère des gaz sous l'effet de la chaleur.

La composition chimique intumescente comporte donc au moins un composé chimique qui est un acide (par exemple de l'acide borique, de l'acide phosphorique ou de l'acide sulfurique) ou qui est un catalyseur acide (par exemple un ester d'acide phosphorique ou un ester d'acide sulfurique) ou qui génère au moins un acide sous l'effet d'une température supérieure à 150°C (par exemple un sel d'acide phosphorique, du phosphate d'ammonium ou du polyphosphate d'ammonium).

De plus, la composition chimique intumescente comporte au moins un composé chimique qui génère au moins un composé carboné (plus particulièrement qui génère du carbone), ceci sous l'action de l'acide mentionné ci-dessus. Un tel composé chimique (qui génère au moins un composé carboné) peut être un polyalcool (par exemple le pentaérythriol), un sucre simple ou un polysaccharide.

En outre, la composition chimique intumescente comporte au moins un composé chimique qui génère des gaz sous l'effet de la chaleur. Un tel composé chimique peut être un composé chimique qui, sous l'action de la chaleur, se décompose et qui, en se décomposant, gonfle. De manière alternative ou (et de préférence) additionnelle, un tel composé chimique (qui génère des gaz sous l'effet de la chaleur) :
- peut par exemple, être de la mélamine, de la guanidine ou de l'urée ; et/ou
- peut être choisi en sorte que le gaz généré soit, par exemple, de l'ammoniac (NH3) ou du dioxyde de carbone (CO2).

En ce qui concerne la formulation liquide utilisée pour former le revêtement intumescent, elle comporte :
- au moins un matériau intumescent ou une composition chimique intumescente, telle que décrite ci-dessous dont le pourcentage massique est compris entre 10 et 40% et de préférence entre 20 et 30%, et est notamment de l'ordre de 25% ;
- au moins une phase liquide (plus particulièrement de l'eau et/ou un solvant organique), dont le pourcentage massique est compris entre 20 et 50% et de préférence entre 35 et 45%, et est notamment de l'ordre de 40% ; et
- au moins un liant (plus particulièrement un liant de type acrylique et/ou de type vinylique), dont le pourcentage massique est compris entre 20 et 50% et de préférence entre 30 et 40%, et est notamment de l'ordre de 35%.

Les proportions de ces composants sont telles que la somme des pourcentages massiques des composants (au moins une phase liquide, au moins un liant, au moins un matériau intumescent) de la composition chimique intumescente est de 100%.

La formulation liquide destinée à former le revêtement est rhéofluidifiant, c'est-à-dire qu'elle devient d'autant plus fluide que le taux de cisaillement qui lui est appliqué est élevé. Cette formulation liquide présente, un extrait sec compris entre 50% et 80%, et par exemple égal à 70% dans le cas d'une dispersion aqueuse intumescente.

Cette formulation liquide présente, en outre, une viscosité « Brookfield » mesurée à 23°C avec un mobile N°6 et :
- pour une vitesse de rotation du mobile de 2 tr/min (tours par minute), qui est comprise entre 80000 mPa.s (millipascal-seconde) et 180000 mPa.s ; et
- pour une vitesse de rotation du mobile de 20 tr/min, qui est comprise entre 15000 mPa.s et 40000 mPa.s.

A titre d'illustration, elle présente, par exemple, une viscosité égale à 107000 mPa.s pour une vitesse de rotation de 2 tr/min et égale à 21000 mPa.s pour une vitesse de rotation de 20 tr/min, dans le cas d'une dispersion aqueuse intumescente possédant un extrait sec de 70%.

Dans un deuxième exemple, le revêtement est un revêtement anti-abrasion respirant à base de charges minérales. Dans ce deuxième exemple, la formulation liquide 5 destinée à former le revêtement 4 comporte :
- au moins une résine polymère assurant le rôle de liant, par exemple un copolymère styrène acrylique en dispersion aqueuse ;
- au moins un type de charge, par exemple du kaolin (alumino-silicate) et/ou du dioxyde de titane, dont les particules présentent un diamètre moyen compris entre 1 et 10 µm ; et
- au moins un agent dispersant à base de copolymère acrylique.

Cette formulation liquide est une dispersion aqueuse dont la viscosité et l'extrait sec peuvent être ajustés en ajoutant de l'eau.

Le revêtement obtenu présente :
- un grammage surfacique compris entre 100 et 150 g/m² ; et
- une épaisseur comprise entre 80 et 120 g/m².

**Le tableau T1 suivant présente une composition possible d'une formulation liquide pour former un revêtement anti-abrasion respirant à base de Kaolin.**

| Composants | Parts | Nature |
|---|---|---|
| Liant | 55 | résine styrène acrylique en dispersion aqueuse extrait sec de 50% ; pH compris entre 7,5 et 9 ; viscosité comprise entre 6000 et 12000 mPa.s |
| Charge 1 | 31 | kaolin - D60 < 2µm |
| Charge 2 | 0,6 | dioxyde de titane |
| Eau | 12 | |

En outre, dans un troisième exemple, le revêtement est un revêtement anti-abrasion respirant à base de dioxyde de titane. Dans ce troisième exemple, la formulation liquide 5 destinée à former le revêtement, comporte :
- au moins une résine polymère assurant le rôle de liant, par exemple une formulation en polyuréthane (PU) ;
- au moins un type de charge, par exemple du dioxyde de titane, dont le diamètre des particules est compris entre 30 et 70µm ; et
- au moins un catalyseur.

Cette formulation liquide est en phase solvant. La viscosité et l'extrait sec peuvent être ajustés en ajoutant de l'acétate de n-butyle et/ou de la butanone.

Le revêtement obtenu présente :
- une viscosité Brookfield (à 25°C, aiguille 5, 10 tr/min), comprise entre 20000 et 25000 mPa.s ;
- un grammage surfacique compris entre 250 et 500 g/m² ; et
- une épaisseur comprise entre 190 et 380 µm.

**Le tableau T2 suivant présente une composition possible d'une formulation liquide pour former un revêtement anti-abrasion respirant à base de dioxyde de titane.**

| Composants | Parts | Nature |
|---|---|---|
| Résine PU | 100 | 4,4'-Methylenediphenyl diisocyanate |
| | | butane-1,3-diol, 2,4'-diisocyanatodiphenylmethane, |
| | | 1,1'-methylenebis(4-isocyanatobenzene) homopolymer |
| | | [(methylethylene)bis(oxy)]dipropanol and propane-1,2-diol |
| | | 4,4'-Methylenebis(cyclohexyl isocyanate) |
| | | 4,4'-Diisocyanate de diphénylméthane |
| Catalyseur | 5 | Bis (1,2,2,6,6-pentamethyl-4-piperidyl) sebacate |
| | | Methyl 1,2,2,6,6-pentamethyl-4-piperidyl sebacate |
| | | 2-(2H-benzotriazol-2-yl)-4,6-ditertpentylphenol |
| Charge | 78 | dioxyde de titane |

Par ailleurs, dans un quatrième exemple, le revêtement comprend des charges ignifugeantes. Dans ce quatrième exemple, la formulation liquide 5 destinée à former le revêtement 4, comporte :
- au moins une résine polymère assurant le rôle de liant, par exemple un copolymère styrène acrylique et/ou un polyuréthane en dispersion aqueuse ; et
- au moins un type de charge ignifugeante, par exemple un polyphosphate aromatique présentant une teneur en phosphore supérieure à 5 %, idéalement supérieure à 16 %, avec un diamètre moyen de particules compris entre 10 et 50 µm.

Cette formulation liquide est une dispersion aqueuse dont la viscosité et l'extrait sec peuvent être ajustés en ajoutant de l'eau.

Le revêtement obtenu présente :
- une viscosité Brookfield (à 25°C, aiguille 4, 10 tr/min), comprise entre 5000 et 55000 mPa.s ;
- un grammage surfacique compris entre 150 et 250 g/m² ; et
- une épaisseur comprise entre 130 et 230 µm.

**Le tableau T3 suivant présente une composition possible d'une formulation liquide pour former un revêtement perméable à la vapeur d'eau, qui est ignifuge.**

| Composants | Parts | Nature |
|---|---|---|
| Liant | 60-70 | résine styrène acrylique en dispersion aqueuse |
| | | résine polyuréthane en dispersion aqueuse |
| Charge 1 | 40-30 | ignifugeant |
| | | polyphosphate aromatique |

Les charges 6 présentes dans le revêtement 4 de la membrane 1 génèrent deux effets qui sont bénéfiques à la respirabilité de la membrane 1 :
- d'une part, elles créent des aspérités et des cavités à l'interface 22 entre le support 2 et le revêtement 4. Cette rugosité, en ménageant des espaces 23 (figure 5) contenant de l'air, facilite la respirabilité de l'ensemble formé du support 2 et du revêtement 4 en créant des zones tampons dans lesquelles est stockée, puis délivrée la vapeur d'eau ; et
- d'autre part, elles créent des interstices 24 (figure 5) à l'intérieur du revêtement 4 (sec et dur), susceptibles de contenir de l'air, favorisant ainsi le stockage puis la libération de la vapeur d'eau.

Dans le cadre de la présente invention, la couche adhésive 3 (sensible à la pression et perméable à la vapeur d'eau) de la membrane 1 peut être réalisée de différentes manières.

A titre d'exemple, l'adhésif 10 de la couche adhésive 3 peut, notamment, être un adhésif acrylique ou un adhésif polyuréthane.

Ainsi, dans un premier mode de réalisation, la couche adhésive 3 comprend un adhésif acrylique.

Dans un premier exemple de ce premier mode de réalisation, l'adhésif acrylique est un adhésif acrylique thermofusible (« hotmelt » en anglais) réticulé par UV, tackifié ou non avec des résines tackifiantes type esters de colophane hydrogénée ou des résines hydrocarbonées.

En outre, dans un second exemple de ce premier mode de réalisation, l'adhésif acrylique est un adhésif acrylique auto-réticulant en phase solvant à base de copolymères d'acrylates (copolymères carboxylés à base des esters acryliques) obtenus par la polymérisation de monomères acryliques tels que : acrylate de méthyle, acrylate d'éthyle, acrylate de 2-éthylhexyle, acrylate de n-butyle, acrylate de 2-hydroxyéthyle, ou similaires. La réticulation pourra être obtenue par ajout de tout agent de réticulation bien connu de l'homme du métier tel qu'un chélate métallique ou l'acétylacétonate=tris (2,4-pentanedionato-O,O') d'aluminium par exemple.

La viscosité et le comportement rhéologique de l'adhésif pourront aisément être ajustés par les systèmes solvants hydrocarbures aromatique et aliphatique, tels que les solvants alcooliques (méthanol, éthanol, propanol 2), les solvants cétoniques (acétone, méthyléthylcétone, pentane-2,4 dione,), les solvants aromatiques (toluène), les solvants aliphatiques cycliques (cyclohexane, méthylcyclohexane), les solvants aliphatiques (hexane et isomères, n-heptane, octane et isomères).

En outre, dans un second mode de réalisation, l'adhésif 10 de la couche adhésive 3 peut être un adhésif polyuréthane. En particulier, l'adhésif 10 peut être un adhésif polyuréthane bi-composant tel que du polyol polyéther et polyisocyanate aliphatique avec un catalyseur étain (II) bis (2-éthylhexanoate).

Par ailleurs, de préférence, la couche adhésive 3 présente une masse surfacique comprise entre 50 et 160 g/m² et, de préférence, une masse surfacique de 130 g/m². De plus, de préférence, cette couche adhésive 3 présente une épaisseur inférieure ou égale à 200 µm, et de préférence, une épaisseur de 130 µm.

Par ailleurs, afin de protéger la couche adhésive 3, la membrane peut également comporter un film protecteur siliconé (non représenté) ou similaire.

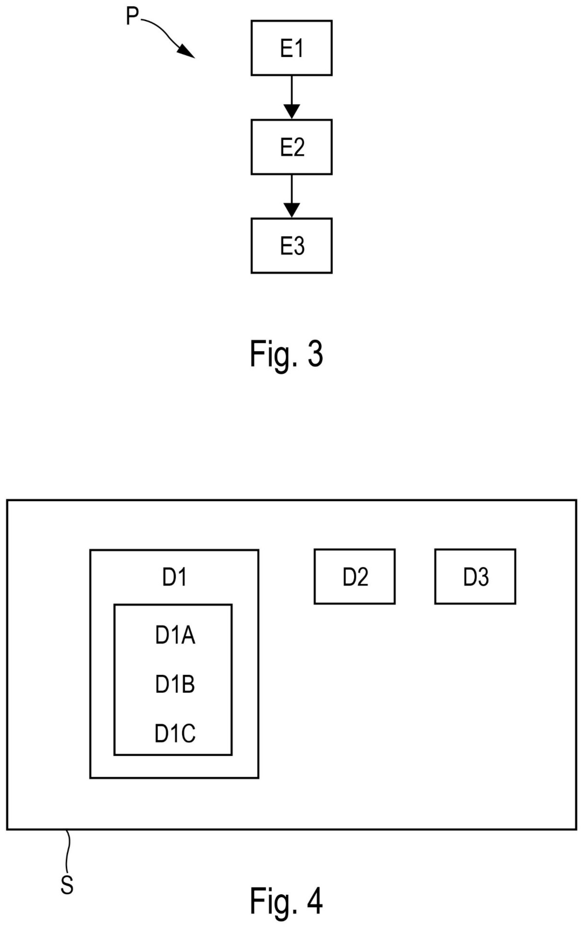

La membrane 1, telle que décrite ci-dessus, peut être fabriquée à l'aide d'un procédé de fabrication P dont les étapes principales sont représentées sur la figure 3, à l'aide d'un système de fabrication S représenté très schématiquement sur la figure 4.

Ce procédé de fabrication P comprend au moins :
- une étape d'enduction E1 (figure 3), mise en œuvre par un dispositif d'enduction D1 du système de fabrication S (figure 4), consistant à enduire au moins une face 2A d'un support 2 perméable à la vapeur d'eau d'une formulation liquide 5 pourvue de charges 6 ;
- une étape de séchage E2, mise en œuvre par un dispositif de séchage D2 du système de fabrication S, consistant à chauffer le produit obtenu à l'étape d'enduction E1 pour le sécher ; et
- une étape d'application d'adhésif E3, mise en œuvre par un dispositif d'application d'adhésif D3 du système de fabrication S, consistant à appliquer une couche adhésive 3 sur une face 2B du support 2, opposée à ladite face 2A.

Lors de la mise en œuvre du procédé de fabrication P, la formulation destinée à former le revêtement 4 est toujours déposée en phase liquide à l'étape d'enduction E1, par une méthode d'enduction connue, telle que par exemple une enduction à la racle, une enduction en « roll-to-roll » ou une enduction à la « comma bar », puis elle est séchée, à l'étape de séchage E2, dans un ou plusieurs fours afin d'évaporer le liquide pour d'obtenir le revêtement sous forme solide.

Concernant le liquide utilisé pour la formulation liquide, il peut s'agir d'eau (dispersion aqueuse) ou d'un mélange de solvants organiques (solution). La formulation liquide du revêtement est rhéofluidifiante, c'est-à-dire qu'elle devient d'autant plus fluide que le taux de cisaillement qui lui est appliqué est élevé.

Le dispositif de séchage D2 comprend, de façon usuelle, un ou plusieurs fours destinés à faire s'évaporer le liquide de la formulation liquide 5 pour obtenir le revêtement 4 sous forme solide. Un tel dispositif de séchage D2 et sa mise en œuvre sont bien connus et pas décrits davantage.

De même, le dispositif d'application d'adhésif D3 et sa mise en œuvre sont également bien connus et pas décrits davantage. De préférence, l'étape d'application d'adhésif E3 est mise en œuvre après l'étape de séchage E2. Il est toutefois également envisageable de mettre en œuvre l'étape d'application E3 avant l'étape d'enduction E1.

Dans le cadre de la présente invention, l'étape d'enduction E1 peut être réalisée de différentes manières. On présente, ci-après, différents modes de réalisation du dispositif d'enduction D1 du système de fabrication S et de l'étape d'enduction E1 du procédé de fabrication P.

Dans un premier mode de réalisation représenté sur la figure 6, l'étape d'enduction E1 utilise un dispositif d'enduction D1A. Ce dispositif d'enduction D1A comprend une unité d'enduction 11A et un système d'alimentation 12A en support 2. Dans ce mode de réalisation, le support 2 correspond, par exemple, à un film en non-tissé en polypropylène.

Le support 2 est amené, par le système d'alimentation 12A, dans le sens illustré par une flèche 13A, à l'unité d'enduction 11A. L'unité d'enduction 11A est configurée pour déposer la formulation liquide 5 (pourvue des charges 6) sur le support 2, comme illustré par une flèche 14A, en amont d'une racle 15A de l'unité d'enduction 11A, dans le sens de déplacement (illustré par une flèche 16A) du produit 10 formé du support 2 enduit de la formulation liquide 5.

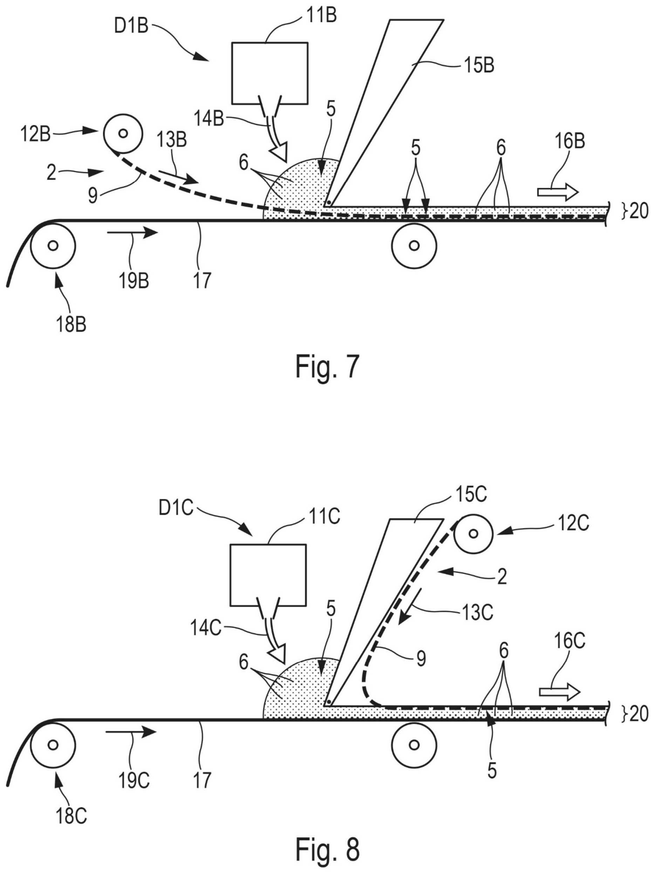

En outre, dans un deuxième mode de réalisation représenté sur la figure 7, l'étape d'enduction E1 utilise un dispositif d'enduction D1B. Ce dispositif d'enduction D1B comprend une unité d'enduction 11B. Le dispositif d'enduction D1B comporte également un système d'alimentation 12B en support 2 et un système d'alimentation 18B en film 17 antiadhérent. Dans ce mode de réalisation, le support 2 correspond, de préférence, à une grille 7, par exemple en fibres de verre, et le film 17 correspond, de préférence, à un papier siliconé.

Le support 2 est amené, par le système d'alimentation 12B, dans le sens illustré par une flèche 13B, à l'unité d'enduction 11B, et il est déposé sur le film 17 (qui est amené dans le sens illustré par une flèche 19B), au niveau de l'unité d'enduction 11B. L'unité d'enduction 11B est configurée pour déposer la formulation liquide 5 sur le support 2 posé sur le film 17, comme illustré par une flèche 14B. Le dépôt de la formulation liquide 5 est réalisé en amont d'une racle 15B de l'unité d'enduction 11B, dans le sens de déplacement (illustré par une flèche 16B) d'un produit 20 formé du support 2 déposé sur le film 17 et enduit de la formulation liquide 5.

Par ailleurs, dans un troisième mode de réalisation représenté sur la figure 8, l'étape d'enduction E1 utilise un dispositif d'enduction D1C. Ce dispositif d'enduction D1C comprend une unité d'enduction 11C. Le dispositif d'enduction D1C comporte également un système d'alimentation 18C en film 17 antiadhérent. Dans ce mode de réalisation, le film 17 correspond, de préférence, à un papier siliconé.

Le film 17 est amené, par le système d'alimentation 18C, dans le sens illustré par une flèche 19C, à l'unité d'enduction 11C. L'unité d'enduction 11C est configurée pour déposer la formulation liquide 5 sur le film 17, comme illustré par une flèche 14C, en amont d'une racle 15C de l'unité d'enduction 11C, dans le sens de déplacement (illustré par une flèche 16C).

Le dispositif d'enduction D1C comporte également un système d'alimentation 12C en support 2 (amené dans le sens illustré par une flèche 13C). Dans ce mode de réalisation, le support 2 correspond, de préférence, à une grille 7, par exemple en fibres de verre.

Le support 2 est introduit (ou intégré) dans la formulation liquide 5 (déposée sur le film 17), en aval de la racle 15C de l'unité d'enduction 11C dans le sens de déplacement (illustré par une flèche 16C) du produit 20 formé du support 2 enduit de la formulation liquide 5 déposée sur le film 17.

Dans ce troisième mode de réalisation, l'étape d'enduction E1 comprend ainsi :
- une sous-étape d'enduction consistant à déposer la formulation liquide 5 sur une face du film 17 antiadhérent ; et
- une sous-étape d'intégration consistant à intégrer le support 2 dans la formulation liquide 5 déposée sur le film 17 antiadhérent.

Dans les deuxième et troisième modes de réalisation des figures 7 et 8, comprenant comme support 2 une grille 7, la formulation liquide 5 (pourvue des charges 6) recouvre non seulement une face du support 2, mais elle pénètre également dans la grille 7 comme représenté également sur la figure 2.

La profondeur de pénétration de la grille dans le revêtement liquide peut être ajustée en fonction de la viscosité du revêtement (formulation, extrait sec), de la vitesse d'enduction, de la pression lors de l'intégration, de la température, ...

On notera que, lors de la mise en œuvre de ce procédé de fabrication P, on peut agir notamment sur la vitesse d'enduction de la formulation liquide destinée à former le revêtement et sur la viscosité de cette formulation liquide (lors de l'étape d'enduction E1) ainsi que sur la température de séchage (lors de l'étape de séchage E2) pour favoriser la formation de bulles d'air entre le revêtement et le support, ainsi que dans le revêtement. Des telles bulles d'air permettent d'améliorer la respirabilité de la membrane 1.

La membrane 1 obtenue à partir du procédé de fabrication P décrit ci-dessus est également très résistante.

On présente, ci-après, plusieurs exemples de mesures de résistance à l'abrasion réalisées selon différentes méthodes de mesure, qui permettent de mettre en évidence les propriétés avantageuses de la membrane 1 (comprenant le revêtement 4) concernant la résistance à l'abrasion, par rapport à une membrane similaire dépourvue de revêtement.

Dans un premier exemple, des mesures de résistance à l'abrasion rotative de type Taber ont été réalisées selon la norme ASTM D3884-09 (conditions de test : meule CS10, vitesse 60 tr/min, poids 500 g/bras). Ces mesures ont été réalisées sur un support en polypropylène (PP) perméable à la vapeur d'eau, de type tricouche (non-tissé PP, film PP microperforé, non-tissé PP) tel que par exemple celui représenté sur la figure 1, présentant une épaisseur de 500 µm et un grammage surfacique de 150 g/m².

On a obtenu les résultats suivants, en fonction de la présence ou non d'un revêtement sur le support :
- sans revêtement :
   - après 50 tours, début de dégradation de la surface du support en non-tissé avec arrachement de fibres ; et
   - après 150 tours, arrachement important de fibres ; et
- avec un revêtement présentant un grammage de 200 g/m² : aucune dégradation à 1500 tours, ni arrachement de fibres, ni trace d'usure.

Dans un deuxième exemple, des mesures de résistance à l'abrasion linéaire (de type Crockmeter) ont été réalisées selon les méthodes d'essai D441221 et D451010 (avec une amplitude du mouvement d'aller-retour de 10 cm et une fréquence de 60 allers-retours/min).

Ces mesures ont été réalisées sur un support en polypropylène (PP) perméable à la vapeur d'eau, de type tricouche (non-tissé PP, film PP microperforé, non-tissé PP, tel que par exemple celui représenté sur la figure 1, présentant une épaisseur de 500 µm et un grammage surfacique de 150 g/m².

Dans ce deuxième exemple, un premier ensemble de mesures a été réalisé avec une charge de 400 g et un patin de type corde à piano (diamètre de 0,5 mm), sur ce support.

On a obtenu les résultats suivants, en fonction de la présence ou non d'un revêtement sur le support :
- sans revêtement :
   - après 50 allers-retours, début de dégradation de la surface du support en non-tissé avec arrachement de fibres ; et
   - après 200 allers-retours, arrachement important de fibres ; et
- avec un revêtement présentant un grammage de 200 g/m² :
   - après 200 allers-retours, aucune dégradation, ni arrachement de fibres, ni trace d'usure ;
   - après 400 allers-retours, légère abrasion du revêtement, aucun arrachement de fibres du support en non-tissé ; et
   - après 1000 allers-retours, usure du revêtement, arrachement de quelques fibres du non-tissé.

Dans ce deuxième exemple (relatif à la résistance à l'abrasion linéaire), un deuxième ensemble de mesures a également été réalisé avec une charge de 400 g et un patin de type papier abrasif de grain P600, sur le support précité (en polypropylène de type tricouche).

On a obtenu les résultats suivants, en fonction de la présence ou non d'un revêtement sur le support :
- sans revêtement :
   - après 50 allers-retours, début de dégradation de la surface du support en non-tissé avec arrachement de fibres ; et
   - après 100 allers-retours, arrachement important de fibres avec dégradation complète de la couche externe du non-tissé ; et
- avec un revêtement présentant un grammage de 200 g/m² :
   - après 50 allers-retours, début de dégradation du revêtement, aucun arrachement de fibres du support en non-tissé ; et
   - après 1000 allers-retours, usure du revêtement, arrachement de quelques fibres du support en non-tissé.

De plus, dans ce deuxième exemple (relatif à la résistance à l'abrasion linéaire), un troisième ensemble de mesures a été réalisé avec une charge de 200 g et un patin de type papier abrasif de grain P120, sur le support précité (en polypropylène de type tricouche).

On a obtenu les résultats suivants, en fonction de la présence ou non d'un revêtement sur le support :
- sans revêtement :
   - après 50 allers-retours, début de dégradation de la surface du support en non-tissé avec arrachement de fibres ; et
   - après 100 tours, arrachement important de fibres avec dégradation complète de la couche externe du support en non-tissé ; et
- avec un revêtement présentant un grammage de 200 g/m² :
   - après 50 allers-retours, aucune dégradation, ni arrachement de fibres, ni trace d'usure ;
   - après 100 allers-retours, début de dégradation du revêtement, aucun arrachement de fibres du support en non-tissé.

Par ailleurs, dans ce deuxième exemple (relatif à la résistance à l'abrasion linéaire), des mesures ont également été réalisées avec une charge de 400 g et un patin de type papier abrasif de grain P600, sur un support perméable à la vapeur d'eau en cellulose monocouche (non-tissé en cellulose de 14 g/m², avec une épaisseur de 70 µm).

On a obtenu les résultats suivants, en fonction de la présence ou non d'un revêtement sur le support :
- sans revêtement :
   - après 10 allers-retours, début de dégradation de la surface du support en non-tissé avec arrachement de fibres ; et
   - après 50 allers-retours, arrachement total des fibres du support en non-tissé et percement local ; et
- avec un revêtement présentant un grammage de 200 g/m² : à 500 allers-retours, ni arrachement de fibres, ni trace d'usure.

Les résultats (des premier et deuxième exemples précédents de mesures) permettent de bien mettre en évidence les propriétés avantageuses en termes de résistance à l'abrasion apportées par le revêtement à la membrane, par rapport à une membrane adhésive et respirante, usuelle, dépourvue d'un tel revêtement.

Le membrane 1, telle que décrite ci-dessus, est donc résistante, perméable à la vapeur d'eau et auto-adhésive. Cette membrane 1, peut être utilisée dans diverses applications, et en particulier dans le domaine du bâtiment.

Plus généralement, la membrane 1, peut être utilisés dans toutes les applications dans lesquelles ses caractéristiques avantageuses, et notamment sa résistance à l'abrasion et sa perméabilité élevée à la vapeur d'eau (permettant des échanges de vapeur d'eau tout en présentant des propriétés de barrière à l'eau), sont recherchées.

Il est bien évident que les exemples présentés ci-dessus ne sont que des illustrations particulières, en aucun cas limitatives quant aux domaines d'application de la présente invention. De plus, des caractéristiques de certains de ces exemples différents peuvent être combinées entre elles si cela est approprié, sans sortir du cadre de la présente invention.

## Revendications

1. Membrane perméable à la vapeur d'eau et auto-adhésive, destinée en particulier à être utilisée sur un bâtiment, ladite membrane (1) comprenant un support (2) perméable à la vapeur d'eau, une couche adhésive (3) sensible à la pression et également perméable à la vapeur d'eau, ladite couche adhésive (3) étant solidaire d'une première face (2B) dudit support (2), et un revêtement (4) qui est perméable à la vapeur d'eau, qui est obtenu à partir d'une formulation liquide (5) pourvue de charges (6) et qui est solidaire d'une seconde face (2A) dudit support (2), opposée à ladite première face (2B), **caractérisée en ce que** le revêtement (4) est résistant et est obtenu à partir d'une formulation liquide (5) pourvue de charges (6), qui présente un taux de charge compris entre 30% et 80%, mesuré par un test du taux de charge par calcination à une température de 800°C pendant 60 minutes et **en ce que** la membrane (1) présente une résistance à l'abrasion telle qu'elle ne subit pas de dégradation après 200 tours, avec un test d'abrasion rotative de type Taber selon la norme ASTM D3884-09.

2. Membrane selon la revendication 1,
**caractérisée en ce qu'**elle présente une résistance à l'abrasion telle qu'elle ne subit pas de dégradation après 100 allers-retours, avec un test d'abrasion linéaire de type Crockmeter selon au moins l'une des méthodes d'essai D441221 et D451010, utilisant une charge de 400 g et un patin de type corde à piano.

3. Membrane selon l'une quelconque des revendications précédentes, **caractérisée en ce que** les charges (6) comprennent au moins l'un des types de charges suivants : des charges ignifuges, des oxydes, des pigments minéraux.

4. Membrane selon l'une quelconque des revendications précédentes, **caractérisée en ce que** les charges (6) comprennent au moins des charges intumescentes.

5. Membrane selon l'une quelconque des revendications précédentes, **caractérisée en ce qu'**elle présente au moins l'une des caractéristiques suivantes :
- un taux de transmission de vapeur d'eau, mesuré selon la norme ASTM E96/E96M-12, supérieur à 1 Perm ; et
- un pouvoir adhésif sur verre, mesuré selon la norme ASTM D3330/D3330M-04, supérieur à 2,6 N/cm.

6. Membrane selon l'une quelconque des revendications 1 à 5,
**caractérisée en ce que** ledit support (2) comprend :
- un non-tissé perméable à la vapeur d'eau, monocouche ou multicouche, présentant un grammage surfacique compris entre 10 g/m² et 500 g/m²; ou
- un complexe non-tissé perméable à la vapeur d'eau, multicouche, présentant un grammage surfacique compris entre 50 g/m² et 500 g/m².

7. Membrane selon l'une quelconque des revendications 1 à 5,
**caractérisée en ce que** ledit support (2) comprend un film perméable à la vapeur d'eau, monocouche ou multicouche, présentant un grammage surfacique compris entre 10 g/m² et 500 g/m².

8. Membrane selon l'une quelconque des revendications 6 et 7,
**caractérisée en ce que** ledit support (2) de type multicouche comprend, de plus, au moins une couche microperforée (C2) perméable à la vapeur d'eau.

9. Membrane selon l'une quelconque des revendications 1 à 5,
**caractérisée en ce que** ledit support (2) comprend une grille (9) présentant un grammage surfacique compris entre 10 g/m² et 500 g/m².

10. Membrane selon l'une quelconque des revendications précédentes, **caractérisée en ce que** la couche adhésive (3) comprend un adhésif acrylique ou un adhésif polyuréthane.

11. Procédé de fabrication d'une membrane selon l'une quelconque des revendications 1 à 10,
**caractérisé en ce qu'**il comprend au moins :
- une étape d'enduction (E1), mise en œuvre par un dispositif d'enduction (D1), consistant à enduire une seconde face (2A) d'un support (2) perméable à la vapeur d'eau, d'une formulation liquide (5) pourvue de charges (6), qui présente un taux de charge compris entre 30% et 80%, mesuré par un test du taux de charge par calcination à une température de 800°C pendant 60 minutes ;
- une étape de séchage (E2), mise en œuvre par un dispositif de séchage (D2), consistant à sécher le produit (10, 20) obtenu à l'étape d'enduction (E1) ; et
- une étape d'application d'adhésif (E3), mise en œuvre par un dispositif d'application d'adhésif (E3), consistant appliquer une couche adhésive (3) sensible à la pression et perméable à la vapeur d'eau, sur une première face (2B) du support (2) du produit (10,20) séché à l'étape de séchage (E2), cette première face (2B) étant opposée à ladite seconde face (2A) du support (2).

12. Procédé selon la revendication 11,
**caractérisé en ce qu'**à l'étape d'enduction (E1), la formulation liquide (5) est déposée directement sur le support (2).

13. Procédé selon la revendication 11,
**caractérisé en ce que** l'étape d'enduction (E1) comprend :
- une sous-étape d'enduction consistant à déposer la formulation liquide (5) sur une face d'un film (17) antiadhérent ; et
- une sous-étape d'intégration consistant à intégrer le support (2) dans la formulation liquide (5) déposée sur le film (17) antiadhérent.
